# EUROPEAN PATENT SPECIFICATION

(11) **EP 2 466 972 B1**
(45) Date of publication and mention of the grant of the patent: **11.09.2013**
(21) Application number: 10360044.1
(22) Date of filing: 15.12.2010
(51) Int. Cl.: H04W 52/02, H04W 88/08

(54) **Network node and method**
Netzwerkknoten und Verfahren
Noeud de réseau et procédé

(43) Date of publication of application: 20.06.2012
(73) Proprietor: Alcatel Lucent, 75007 Paris (FR)
(72) Inventor: Brend, Graham R., Bathford, Bath BA1 7UE (GB); Puddle, Nicola, Swindon, Wiltshire SN4 0ND (GB); Wong, Shin Horng, Chippenham, Wiltshire SN14 0SP (GB)
(74) Representative: Sarup, David Alexander

(56) References cited:
- WIDIARTI H ET AL: "Interference Mitigation Based on Femtocells Grouping in Low Duty Operation", VEHICULAR TECHNOLOGY CONFERENCE FALL (VTC 2010-FALL), 2010 IEEE 72ND, IEEE, PISCATAWAY, NJ, USA, 6 September 2010 (2010-09-06), pages 1-5, XP031770523, ISBN: 978-1-4244-3573-9
- LUIS M CORREIA ET AL: "Challenges and enabling technologies for energy aware mobile radio networks", IEEE COMMUNICATIONS MAGAZINE, IEEE SERVICE CENTER, PISCATAWAY, US, vol. 48, no. 11, 1 November 2010 (2010-11-01), pages 66-72, XP011320499, ISSN: 0163-6804
- IMRAN ASHRAF ET AL: "Improving Energy Efficiency of Femtocell Base Stations Via User Activity Detection", WIRELESS COMMUNICATIONS AND NETWORKING CONFERENCE (WCNC), 2010 IEEE, IEEE, PISCATAWAY, NJ, USA, 18 April 2010 (2010-04-18), pages 1-5, XP031706720, ISBN: 978-1-4244-6396-1

## Description

### FIELD OF THE INVENTION

The present invention relates to a method, a network node and a computer program product.

### BACKGROUND

In a cellular wireless telecommunications system, radio coverage is provided by areas known as cells. A base station is located in each cell to provide the radio coverage area. Traditional base stations provide coverage in relatively large geographical areas and these cells are often referred to as macro cells. It is possible to provide smaller-sized cells, often within a macro cell. Such smaller-sized cells are sometimes referred to as micro cells, pico cells or femto cells. The term "small cell" will be used to refer generally to all such small cells. Small cells are typically established by providing a small cell base station that provides radio coverage having a relatively limited range, often within the radio coverage area of a macro cell. The transmission power of the small cell base station is relatively low and, hence, each small cell provides a smaller coverage area compared to that of a macro cell and covers, for example, an office or other commercial location or a home. A group of such small cell base stations may together provide a wireless small cell network.

Such small cells are typically provided where the communications coverage provided by the macro cell is poor, or where a user wishes to use an alternative communications link provided locally by the small cell base station to communicate with the core network. Such a situation may arise where, for example, a pre-existing communications network exists and the use of that network to communicate with the core network is desired in preference to that provided by the macro network.

The group of small cell base stations providing the wireless small cell network can together provide extended local coverage to user equipment throughout, for example, a home, an office building or a commercial premises by using multiple small cell base stations distributed throughout those buildings, which enables each of those base stations to transmit at a lower power than would otherwise be necessary if coverage was to be provided by a single small cell base station.

WIDIARTI H ET AL: "Interference Mitigation Based on Femtocells Grouping in Low Duty Operation" VEHICULAR TECHNOLOGY CONFERENCE FALL (VTC 2010-FALL), 2010 IEEE 72ND, IEEE, PISCATAWAY, NJ, USA 6 September 2010 (2010-09-06), Pages 1-5, ISBN: 978-1-4244-3573-9 discloses an interference mitigation scheme based on the grouping of femtocells in one neighbourhood area. In a low duty operation mode, the femtocell changes alternately between available and unavailable intervals. The femto base stations may be grouped.

Although the deployment of such small cell base stations provides many advantages, the proliferation of the deployment of such small cell base stations can cause undesirable consequences. Accordingly, it is desired to provide improved techniques for obviating the problems associated with such deployments.

### SUMMARY

According to a first aspect, there is provided a method of controlling an operating state of small cell base stations, the operating state comprising one of a non-sleeping state in which a small cell base station is operable to support communications with user equipment and sleeping state in which a small cell base station is inoperable to support communications with user equipment, the method comprising the steps of: determining whether a predetermined event has been experienced by at least one small cell base station of a group of small cell base stations and, if so, instructing at least a sub-group comprising a plurality of small cell base stations of the group of small cell base stations to transition between the non-sleeping state and the sleeping state.

The first aspect recognises that one of the most numerous elements within a wireless telecommunications network are the base stations which support the radio interface and provide the cellular coverage of the network, allowing user equipment to access that network. One of the elements of a base station that consumes the most power is the power amplifier. Typically, base stations continuously transmit a pilot (for example, a common pilot channel) and broadcast information all the time regardless of whether there is any traffic or user equipment within the cell being supported by that base station. Hence, significant energy savings can be achieved if the base stations within the network can enter a sleeping or inactive state or mode where they shut off their transmitters (and particularly their power amplifiers) when there is no traffic.

Small cell base stations consume significantly less power than macro base stations and the actual energy savings per small cell base station that would be realised by entering a sleeping mode and turning off the transmitter (and particularly the power amplifier) in any one small cell base station is low. However, when numerous small cell base stations are deployed, the cumulative savings are potentially very significant. Whilst shutting off a small cell base station helps provide energy savings, one of the consequences is that whenever user equipment roams into the cell supported by that small cell base station, the small cell base station needs to be able to rapidly switch on its transmitter again in order to provide coverage to that user equipment and to inform the user equipment of the small cell base station's presence, so as to allow the user equipment to either establish a connection with that small cell base station or to allow it to maintain an existing connection.

Having the ability to rapidly switch the transmitter on again is likely to be more important for a small cell base station than a macro base station since the small cell base station coverage area is considerably smaller and, hence, a transiting user equipment could move between small cell base stations much more rapidly than between macro base stations.

Therefore, the first aspect recognises that one key element supporting a viable energy saving mechanism within the wireless telecommunications network is having the ability to be able to inform a small cell base station of when it should transition between sleeping and non-sleeping states and to ensure that this is provided to the small cell base station in a swift and efficient way, so as to allow the small cell base station to provide the required services to any user equipment within its coverage area when required.

The first aspect also recognises that a key deployment scenario for small cell base stations is likely to be within a commercial environment such as an office or shopping mall. In this scenario, the deployment of the small cell base stations is likely to be managed and, hence, the small cell base stations will be typically located to ensure adequate coverage throughout the entire building. Since such deployments are likely to be managed, it may be possible that small cell base stations can be grouped together to provide sub-groups within the building and, hence, energy saving mechanisms may then be co-ordinated across these groupings to ensure that the mechanisms are as effective and efficient as possible. Without such co-ordinated mechanisms across sub-groups, each small cell base station may attempt to autonomously manage its energy saving mechanisms, which can lead to issues when small cell base stations are deployed as a network, since each small cell base station may take action which seems appropriate to it but which affects the overall performance of the small cell network, such as, for example, small cell base stations exiting the energy saving state at different times or not exiting the energy saving state at all when user equipment approaches.

Accordingly, a method of controlling an operating state of small cell base stations is provided. The operating state may be either a sleeping or a non-sleeping state. In the sleeping state the small cell base station may be inoperable to support communications with user equipment because, for example, its transmitter and, in particular, its power amplifier has been deactivated. In such a state, the small cell base station may still be operable to communicate with the core network, typically via a backhaul connection. The non-sleeping state may comprise a state in which the normal operation of the small cell base station may occur and which may enable the small cell base station to support communications with user equipment. The small cell base stations may be formed into a group. That is to say, each small cell base station in a network under the control of an operator for, for example, a building or group of buildings may be a member of such a group. Should a predetermined or predefined event involving one or more small cell base station within the group occur, then more than one base station from within the group may be instructed or ordered to transition between the sleeping and non-sleeping states. For the avoidance of doubt, it will be appreciated that the transition between the sleeping and non-sleeping states encompasses both a transition from the sleeping to the non-sleeping state and from the non-sleeping to the -sleeping state. It will also be appreciated that such a transition may cause all instructed small cell base stations to transition to the same sleeping or non-sleeping state.

In this way, it can be seen that rather than each small cell base station acting autonomously to determine what it considers to be the best operating state for its particular circumstances, instead, small cell base stations within the group may cooperate to ensure that the most appropriate operating state of small cell base stations within the group is selected. Such an approach helps to optimize energy savings made by small cell base stations within the network, whilst ensuring that appropriate levels of service are maintained for user equipment.

In one embodiment, the step of instructing comprises instructing a sub-group including the at least one small cell base station to transition between the sleeping and the non-sleeping state. Accordingly, the sub-group which includes the small cell base station for which the predetermined event occurred may be instructed or ordered to transition between the non-sleeping and sleeping states. Instructing the small cell base stations within the same sub-group as the small cell base station for which the event occurred to transition to the same operating state helps to improve the likelihood that those small cell base stations within the sub-group are in the correct operating state for the circumstances being experienced by at least some within that sub-group.

In one embodiment, the step of instructing comprises instructing a plurality of sub-groups to transition between the sleeping and the non-sleeping state. Accordingly, more than one sub-group may be selected to transition between the non-sleeping and sleeping state.

In one embodiment, the step of instructing comprises instructing the group to transition between the sleeping and the non-sleeping state. Hence, all small cell base stations within the group may be selected to transition to the same operating state. Again, this may improve the likelihood that the small cell base stations are in an operating state which is appropriate for the circumstances being experienced by at least some within that group.

In one embodiment, the predetermined event comprises detection of user equipment and the step of instructing comprises instructing a transition to the non-sleeping state. Accordingly, when user equipment has been identified as being present by a small cell base station, then an instruction is sent to small cell base stations of one or more sub-groups to transition to the non-sleeping state in order to provide support for that user equipment.

In one embodiment, the predetermined event comprises successful attachment of user equipment and the step of instructing comprises instructing a transition to the non-sleeping state. Hence, only when the user equipment successfully attaches to the small cell base station may the instruction to small cell base stations of one or more sub-groups to transition to the non-sleeping state occur. This helps to ensure that user equipment that will not be supported by the small cell base stations do not cause a transition from the sleeping state.

In one embodiment, the predetermined event comprises detection of a register user equipment message and the step of instructing comprises instructing a transition to the non-sleeping state. Accordingly, only when a small cell base station provides a message indicating that user equipment has registered does the instruction to small cell base stations of one or more sub-groups to transition to the non-sleeping state occur.

In one embodiment, the predetermined event comprises failure to detect any user equipment by small cell base stations of at least one sub-group and the step of instructing comprises instructing a transition of the at least one sub-group to the sleeping state. Accordingly, when no user equipment is any longer detectable by those small cell base stations of a sub-group, the sub-group may be instructed to transition to the sleeping state. Hence, when no user equipment is present, the sub-group may be deactivated in order to save power without causing any reduction in service to user equipment.

In one embodiment, the step of instructing comprises transmitting a multicast message to instruct the transition between the sleeping and the non-sleeping state. Accordingly, the instruction may take the form of a multi-cast message which instructs intended recipients to transition between the non-sleeping and sleeping states. It will be appreciated that such a multi-cast message may be transmitted to all small cell base stations within the group or to small cell base stations from one or more sub-groups. The use of a multi-cast message reduces the number of individual messages that would otherwise need to be transmitted.

In one embodiment, the method comprises the step of configuring at least one small cell base station of the group to ignore instructions to transition to the sleeping state and instead to remain in the non-sleeping state. Accordingly, one or more small cell base stations may be configured not to respond to instructions to transition to the sleeping state. This enables "guard" small cell base stations to remain constantly on and able to support communications with user equipment. Such guard base stations may be typically designated where their coverage area includes entry or exit points of a building in order to enable those guard base stations to detect the presence of user equipment when they first attach to or leave the small cell network within the building in which the guard base stations are deployed.

In one embodiment, the method comprises the step of configuring the small cell base stations to transition to the non-sleeping state periodically. Accordingly, small cell base stations may be configured to transition to an active state on a regular basis enabling small cell base stations elsewhere within the network to be designated as guard base stations either permanently or on a transitional basis. For example, every remaining small cell base station which is not an entry or exit point of the network may be designated, even temporarily, as a guard base station in order to detect the presence of previously undetectable user equipment within the coverage area of the network. This approach is particularly effective at identifying user equipment which may have been switched off or was otherwise inactive or undetectable by guard base stations at entry and exit points.

In one embodiment, the method comprises the step of configuring the small cell base stations to transition to the non-sleeping state periodically at different times. Accordingly, each base station may transition from the sleeping state at a different time in order to prevent peak power consumption that might otherwise occur and to improve the likelihood that at least some coverage may be provided somewhere within the network at any one time.

In one embodiment, the predetermined event comprises detection that a network time associated with the at least one small cell base station of the group now falls within one of a plurality of time periods, each time period being associated with an operating state allocated to that time period and the step of instructing comprises instructing a transition to one of the sleeping state and the non-sleeping state associated with the one of the plurality of time periods. Accordingly, a number of time periods may be defined which may be non-overlapping. Each of those time periods may be associated with a particular operating state. For example, two time periods may be defined. A first time period may run from 8.00pm to 6.00am and this time period may be associated with the sleeping state. A second time period may be defined running from 6.00am to 8.00pm and this time period may be associated with the non-sleeping state. A current time may be associated with each small cell base station within the group. When it is determined that the current time associated with a small cell base station within the group now falls within one of the time periods, then a small cell base station may be instructed to transition to the operating state associated with that time period. For example, if the time associated with a small cell base station is deemed now to fall within a new time period, then small cell base stations may be instructed to transition their operating state. Returning to the example given above, if it is determined that the time associated with a small cell base station now falls within the time period of 6.00am to 8.00pm, small cell base stations may be instructed to transition to the non-sleeping state. Likewise, if it is determined that the time associated with a small cell base station now falls within the 8.00pm to 6.00am time period, then small cell base stations may be instructed to transition to the sleeping state. In this way, it can be seen that periods of time may be selected based on the expected requirements of users and/or expected access by users to the buildings and small cell base stations may be deactivated at periods when it is expected that no service is required from those small cell base stations to support user equipment.

It will be appreciated that this technique may be used in combination with techniques mentioned above relating to the detection of user equipment to ensure that an appropriate balance of power saving and service level is provided to user equipment. For example, a determination may be made prior to transitioning to a sleeping state of whether any user equipment is still being supported either by an individual small cell base station, base stations within a sub-group or base stations within the whole group.

In one embodiment, the predetermined event comprises detection that a network time associated with the at least one small cell base station of the group now falls within one of a set of a plurality of time periods, each set of a plurality of time periods being associated with a different sub-group, each time period being associated with an operating state allocated during that time period for that time period, and the step of instructing comprises instructing a transition of the sub-group to one of the sleeping state and the non-sleeping state associated with the one of the set of the plurality of time periods. Accordingly, different time periods and operating states may be defined for different sub-groups. For example, a first sub-group within a deployment such as a building may be defined which seeks to instruct small cell base stations to transition to the sleeping state very early in the evening. This may be useful in, for example, commercial deployments where those small cell base stations are associated with shops which may shut relatively early. However, a second sub-group may be defined where small cell base stations are only instructed to transition to the sleeping mode in the early morning and those small cell base stations may be associated with leisure facilities within the building which may be open for a much longer time. By providing different time periods and operating states it improves flexibility and helps optimize the balance between power saving and service levels based on expected user requirements.

In one embodiment, each small cell base station with each sub-group shares a common characteristic. Hence, each small cell base station within a sub-group may share a similar characteristic which helps define the expected user requirements on small cell base stations within that sub-group and helps to simplify control of small cell base stations since it may be desirable that each small cell base station within the sub-group receives the same instruction to transition to the same operating state.

In one embodiment, the common characteristic comprises at least one of an access type identifier, a location identifier, a function identifier. Hence, the characteristic may comprise an access type identifier. Such an access type identifier may indicate whether the small cell base station is closed access or open access. It may be possible to treat all closed and all open access base stations in the same way. The common characteristic may comprise a location identifier. Small cell base stations located at the same location or located in a similar type of location may be formed into the same group. For example, a building or portion of building may have the same location identifier. It may be that that building or portion of building may have its access restricted at particular times. Hence, it may be possible to cause all of the small cell base stations within that area to change their operating state at the same time. Likewise, the location area identifier may indicate different zones of a building and, again, it may be possible to change the operating state of all small cell base stations within those zones at the same time. The common characteristic may comprise a function identifier. Accordingly, each small cell base station may be associated with a particular function. For example, some base stations may be grouped into a common facilities function, whereby it is expected that a high level of service is to be provided to user equipment. Likewise, some small cell base stations may be designated to function as limited access base stations where it is acceptable for less extensive access to be provided to user equipment. By sub-grouping small cell base stations in this way, it is possible to cause operating state transitions in an appropriate manner for small cell base stations having those functions.

In one embodiment, the predetermined event comprises detection of an emergency situation and the step of instructing comprises instructing a transition to the non-sleeping state. Accordingly, should an emergency be detected such as, for example, through the provision of an emergency detection signal, then all small cell base stations may be instructed to transition to a non-sleeping state in order to provide maximum communications coverage during the incident.

In one embodiment, the predetermined event comprises detection of a power outage and the step of instructing comprises instructing a transition to the sleeping state. Accordingly, should a signal be provided indicating that a power outage occurred, then small cell base stations may be instructed to transition to the sleeping state in order to help conserve power. It will be appreciated that a sub-group of small cell base stations may be retained in the non-sleeping state in order to provide skeleton coverage to user equipment.

According to a second aspect, there is provided a network node operable to control an operating state of small cell base stations, the operating state comprising one of a non-sleeping state sleeping state in which a small cell base station is operable to support communications with user equipment and sleeping state in which a small cell base station is inoperable to support communications with user equipment, the network node comprising: determining logic operable to determine whether a predetermined event has been experienced by at least one small cell base station of a group of small cell base stations and; instruction logic operable, if the determining logic determines that the predetermined event has been experienced by at least one small cell base station of a group of small cell base stations, to instruct at least a sub-group comprising a plurality of small cell base stations of the group of small cell base stations to transition between the non-sleeping state and the sleeping state.

In one embodiment, the instruction logic is operable to instruct a sub-group including the at least one small cell base station to transition between the sleeping and the non-sleeping state. Hence, the sub-group may be instructed to transition from the sleeping to the non-sleeping state or from the non-sleeping to the sleeping state.

In one embodiment, the instruction logic is operable to instruct a plurality of sub-groups to transition between the sleeping and the non-sleeping state. Hence, the plurality of sub-group may be instructed to transition from the sleeping to the non-sleeping state or from the non-sleeping to the sleeping state.

In one embodiment, the instruction logic is operable to instruct the group to transition between the sleeping and the non-sleeping state. Hence, the group may be instructed to transition from the sleeping to the non-sleeping state or from the non-sleeping to the sleeping state.

In one embodiment, the predetermined event comprises detection of user equipment and the instruction logic is operable to instruct a transition to the non-sleeping state.

In one embodiment, the predetermined event comprises successful attachment of user equipment and the instruction logic is operable to instruct a transition to the non-sleeping state.

In one embodiment, the predetermined event comprises detection of a register user equipment message and the instruction logic is operable to instruct a transition to the non-sleeping state.

In one embodiment, the predetermined event comprises failure to detect any user equipment by small cell base stations of at least one sub-group and the instruction logic is operable to instruct a transition of the at least one sub-group to the sleeping state.

In one embodiment, the instruction logic is operable to transmit a multicast message to instruct the transition between the sleeping and the non-sleeping state.

In one embodiment, the network node comprises configuring logic operable to configure at least one small cell base station of the group to ignore instructions to transition to the sleeping state and instead to remain in the non-sleeping state.

In one embodiment, the network node comprises configuring logic is operable to configure the small cell base stations to transition to the non-sleeping state periodically.

In one embodiment, the network node comprises configuring logic is operable to configure the small cell base stations to transition to the non-sleeping state periodically at different times.

In one embodiment, the predetermined event comprises detection that a network time associated with the at least one small cell base station of the group now falls within one of a plurality of time periods, each time period being associated with an operating state allocated to that time period and the instruction logic is operable to instruct a transition to one of the sleeping state and the non-sleeping state associated with the one of the plurality of time periods.

In one embodiment, the predetermined event comprises detection that a network time associated with the at least one small cell base station of the group now falls within one of a set of a plurality of time periods, each set of a plurality of time periods being associated with a different sub-group, each time period being associated with an operating state allocated during that time period for that time period, and the instruction logic is operable to instruct a transition of the sub-group to one of the sleeping state and the non-sleeping state associated with the one of the set of the plurality of time periods.

In one embodiment, each small cell base station with each sub-group shares a common characteristic.

In one embodiment, the common characteristic comprises at least one of an access type identifier, a location identifier, a function identifier.

In one embodiment, the predetermined event comprises detection of an emergency situation and the instruction logic is operable to instruct a transition to the non-sleeping state.

In one embodiment, the predetermined event comprises detection of a power outage and the instruction logic is operable to instruct a transition to the sleeping state.

In one embodiment, the network node comprises one of a gateway and a small cell base station.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 illustrates a general femto cell deployment within one macro cell shown in
Figure 1;

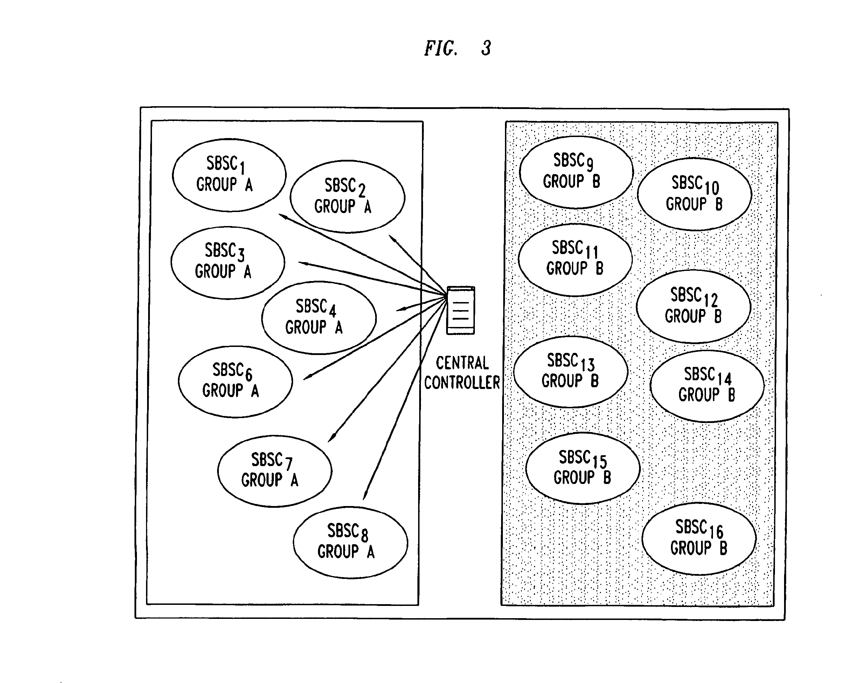

Figure 3 illustrates an example of deployment of small cell base stations; and

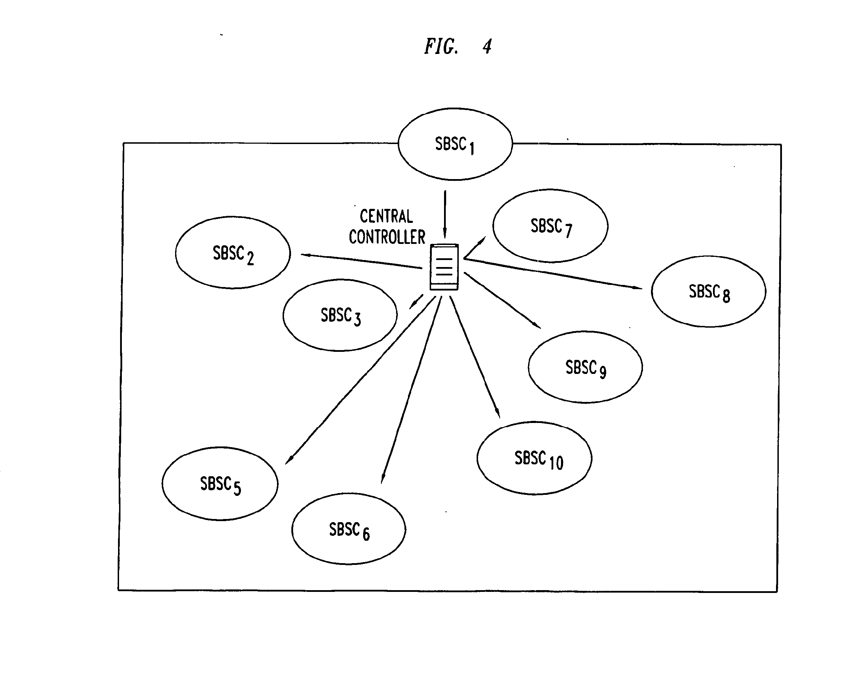

Figure 4 illustrates an example arrangement having a guard small cell base station.

### DESCRIPTION OF THE EMBODIMENTS

### Deployment Overview

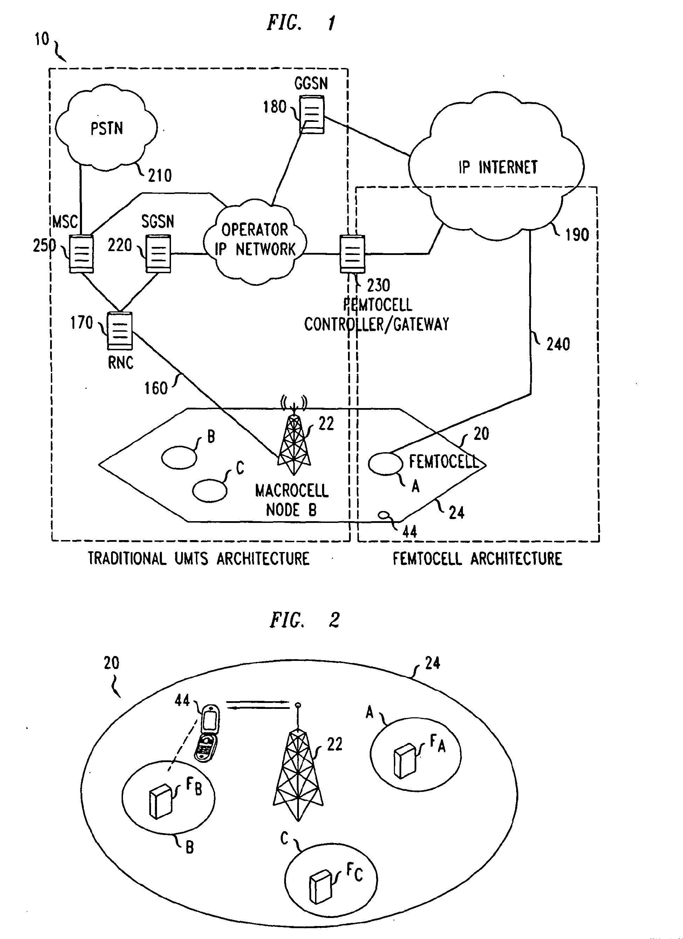

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Of course, it will be appreciated that Figure 1 illustrates a small subset of the total number of user equipment and base stations that may be present in a typical communications system.

The wireless communication system 10 is managed by a radio network controller (RNC) 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations and the radio network controller 170 broadcasts a representation of base station neighbours using a system information broadcast channel. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the radio network controller 170 communicates with serving general packet radio service support nodes (SGSNs) 220 and a gateway general packet radio service support node (GGSN) 180. The GGSN then communicates with a packet-switch core 190 such as, for example, the Internet.

As shown in more detail in Figure 2, there are provided small cell base stations, in this example femto cell base stations F_{A} to F_{C}, each of which provides a femto cell A to C in the vicinity of a building within which the associated femto cell base station is installed. The femto cells A to C provide local communications coverage for a user in the vicinity of those buildings. Each femto cell base station F_{A} to F_{C} communicates via a femtocell controller/gateway 230. The femtocell controller/gateway 230 maintains a neighbour list which includes information about the geographical relationship between cells supported by base stations. A mobility event such as a handover or camping event occurs between the base station 22 and the femto cell base stations F_{A} to F_{C} when the femto base stations F_{A} to F_{C} come within range of the user equipment 44. The femto cell base stations F_{A} to F_{C} typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to F_{C} are provided locally by customers or can be managed by the operator to augment their coverage for public users. Such femto cell base stations F_{A} to F_{C} provide local coverage in areas of the macro network where quality of service may be low. Hence, the femto cell base stations F_{A} to F_{C} provide for improved quality of service in areas which are difficult for network operators.

To reduce the cost of the femto base stations F_{A} to F_{C} and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to F_{C} have extensive auto-configuration and self-optimisation capability to enable a simply plug-and-play deployment. As such, they are designed to automatically integrate themselves into an existing macro cellular wireless network 10.

The femto cells are normally grouped into clusters and each femto cell cluster behaves like a single RNC when communicating with an SGSN in an existing packet switch core network or when communicating with a MSC in an existing circuit switched core network. However, given that the RNC functionality is geographically dispersed across a large number of network elements, it is necessary to deploy a femtocell controller/gateway 230 for each cluster of femto cells. This femtocell controller/gateway 230 terminates the signalling interfaces between the traditional core network elements and the femto cell cluster, thereby creating the notion of a single virtual RNC. This virtual RNC represents the femto cell cluster as a whole. The femtocell controller/gateway 230 supports a number of procedures that are implemented on the femto base stations themselves.

Although the techniques mentioned herein have utility in any user equipment and base station arrangement, these techniques are particularly beneficial in a femto or small cell deployment where the network operator has less control over the deployment and configuration of such small cells.

### Operation Overview

Before discussing embodiments in any further detail, an overview will first be provided.

In order to support a viable energy saving mechanism within the network, a technique is provided which has the ability to inform a small cell base station when it should switch on or off its power amplifier and/or other components to switch between a sleeping state and non-sleeping state and to ensure that this information is provided to the small cell base station in a swift and efficient manner. This enables the small cell base station to perform power saving whilst also providing the required services to any user equipment within its coverage area when required. In particular, when in the sleeping state the hardware components in the small cell base station supporting the small cell base station's air interface and pilot transmissions (such as the power amplifier) are switched off, but the hardware components necessary to support communication with the core network over the backhaul will remain on. When in the non-sleeping state, all required hardware components in the small cell base station will be switched on.

In a commercial environment deployment, such as in an office, a shopping mall or a serviced apartment block, small cell base stations such as femto base stations are likely to be managed and, femto base stations may be located to ensure adequate coverage throughout the entire building or complex. Since such deployments are likely to be managed, it is possible that small cell base stations can be grouped together to provide sub-groups within the building and, hence, energy saving mechanisms can be co-ordinated across these sub-groups to ensure that the mechanisms are as effective and efficient as possible.

Such an approach improves upon solutions where each small cell base station autonomously manages its energy saving mechanism, which can lead to issues when small cell base stations are deployed in close proximity to provide, for example, a small cell network. Accordingly, this technique effectively coordinates energy saving mechanisms across groups or sub-groups of femto base stations when deployed. The technique provides a centralised arrangement which may be controlled by a femtocell controller/gateway 230, such as that illustrated in Figure 1, or, alternatively, the functions may be provided by an enterprise gateway (not shown) which may be deployed locally within the building, or, alternatively, the functions may be provided by a controlling or master small cell base station which has additional functionality. For the purposes of the following description it will be assumed that the functionality resides in the femtocell controller/gateway 230.

The femtocell controller/gateway 230 provides an indication to each small cell base station of when they should enter and exit an energy saving mode in response to an event occurring. In order to provide an effective technique, each small cell base station is designated with information relating to its deployment within the environment. This enables small cell base stations to be sub-grouped if necessary so that certain sub-groups of small cell base stations can be informed of when to enter and exit the energy saving mode without having to treat all small cell base stations within the deployment together. In certain deployments it may be desirable to treat all small cell base stations within the deployment together, but by introducing an energy saving designation it is possible to sub-divide small cell base stations if necessary.

In addition, certain small cell base stations may be designated as guard small cell base stations and may be deployed at the entrance or exit to the premises and, hence, can be excluded from the energy saving mode commands sent by the femtocell controller/gateway 230. Such small cell base stations will continue to act as normal small cell base stations with their transmitters and receivers fully functional. Hence, when an event occurs such as user equipment attaches to such a guard small cell base station, then this small cell base station can provide an indication to the femtocell controller/gateway 230 that user equipment has attached and the femtocell controller/gateway 230 can then make a determination of whether it needs to propagate this indication to other small cell base stations, a sub-group of small cell base stations, more than one sub-group of small cell base stations, or the whole group of small cell base stations, such that they can be provided with a trigger to enter or exit their energy saving modes.

Alternatively and/or additionally, either a small cell base station can provide an indication of the current time at the small cell base station to the femtocell controller/gateway 230, or the femtocell controller/gateway 230 may itself determine the time at the small cell base station and determine from this event whether the small cell base station, a sub-group of small cell base stations, a plurality of sub-groups of small cell base stations or the entire group of small cell base stations should transition in or out of the energy saving mode.

For example, taking the above example, an additional determination may be that only when user equipment attaches to a guard small cell base station after a specific time (such as early in the morning) will the femtocell controller/gateway 230 make a determination to propagate a trigger that a small cell base station should exit its energy saving mode.

Additionally and/or alternatively, a small cell base station, user equipment or other network node is operable to provide an indication to the femtocell controller/gateway 230 indicating that an emergency event has occurred within the building and the femtocell controller/gateway 230 is operable to provide a trigger to a sub-group, a plurality of sub-groups or the whole group of small cell base stations to exit their power saving mode in order to provide maximum coverage to user equipment during the emergency situation.

Likewise, a small cell base station, user equipment or other network node may provide an indication to the femtocell controller/gateway 230 indicating that a power outage event has occurred within the building and the femtocell controller/gateway 230 is operable to transmit a trigger to a sub-group, a plurality of sub-groups or the whole group of small cell base stations to transition to their energy saving mode. This helps to minimise the power load on any emergency generators by switching off as many small cell base stations as possible whilst optionally retaining at least one sub-group of small cell base stations to provide skeleton coverage.

### Time Control

Figure 3 illustrates an example of deployment of small cell base stations arranged to provide coverage within a commercial mall providing a mixture of shops and leisure activities (for example, cinema, ten-pin bowling, restaurants). A similar deployment may be used for an office deployment providing a mixture of offices and communal areas or an apartment providing dwellings and communal areas. Due to the mixture of the different functions within the building, it is desirable to be able to sub-divide the small cell base stations within the building so that energy savings can be applied to different sub-groups. For example, the small cell base stations covering the shops could enter an energy saving mode when the shops close, which is likely to be significantly before those small cell base stations covering the leisure activities within the complex, since such leisure activities would most likely be open during the evenings and possibly into the early morning.

Accordingly, the femtocell gateway/controller 230 is provided with information detailing where each small cell base station is deployed and/or the use or function associated with the location where the small cell base station is deployed and/or the group or sub-groups to which the small cell base station belongs, together with information defining a timeline detailing when the small cell base stations can enter and exit their energy saving modes. These timelines define a series of time periods and associate an operating state of the small cell base station with that period.

Either the small cell base stations themselves or the femtocell controller/gateway 230 determines the current time associated with that small cell base station and is able to determine whether a change in operating state is required. The time associated with the small cell base station may be provided from a clock within the small cell base station or femtocell controller/gateway 230, or from network timing signals.

It will be appreciated that the femtocell controller/gateway 230 may maintain an indication of the current operating state of each small cell base station and only send an instruction when a change in operating state is required.

Each of the different sub-groups may also have associated therewith a different timeline detailing different periods of time and the operating state of the small cell base stations during those times. The femtocell controller/gateway 230 can therefore instruct each sub-group of small cell base stations when they should switch off their power amplifiers and similarly, at some future point, when they can switch on their power amplifiers again. These instructions may utilise a standard 3GPP protocol between the femtocell controller/gateway 230 and the small cell base stations to transmit these instructions.

In this example, small cell base stations SBSC₁₋₈ are allocated to sub-group A and provide coverage to the shops, whilst small cell base stations SBSC₉₋₁₆ are allocated to sub-group B and provide coverage to the leisure premises. In this example, the femtocell controller/gateway 230 sends an indication to only those small cell base stations in sub-group A to enter and exit the energy saving mode based on, for example, the time of day. Similar indications are sent to the small cell base stations in sub-group B at a different times or based on different criteria.

For example, the femtocell controller/gateway 230 may instruct the small cell base stations in sub-group A to switch operating state to the non-sleeping state at 8.00am, and instruct a return to the non-sleeping state at 7.00pm. Similarly, the femtocell controller/gateway 230 may instruct the small cell base stations in sub-group B to enter the non-sleeping state at 10.00am and switch back to the sleeping state at 2.00am.

Of course, it will be appreciated that more than two sub-groups and/or more than two different time periods may be provided.

Note also that the Figure 3 illustrates the small cell base station schematically and omits the overlapping coverage provided by the small cell base stations and by the sub-groups of small cell base stations in order to improve clarity.

### Guard Base Station

Figure 4 illustrates an example arrangement where small cell base station SBSC₁ is designated as a guard small cell base station as it provides coverage to the entrance to the building. A guard base station may be provided on each entrance/exit.

When user equipment enters its coverage area, small cell base station SBSC provides an indication to the femtocell controller/gateway 230. The femtocell controller/gateway 230 then instructs a sub-group, more than one sub-group or the entire group of small cell base stations within that premises to exit their energy saving mode.

The guard base stations are configured to remain in the non-sleeping state for the period that they are acting as a guard base station and will ignore any internal signalling that may occur as a result of user equipment not being present for a predetermined period of time and any signalling from the femtocell controller/gateway 230 instructing a transition to the sleeping state in order to provide coverage at, for example, the entrance/exit.

Each small cell base station will typically be configured to switch to the sleeping state when no user equipment has been supported for a period of time. When the switch to the non-sleeping state occurs, a message may be sent to the femtocell controller/gateway 230 to inform it of the transition in operating state. Hence, should user equipment deactivate when within the building, then the small cell base stations within the building will gradually de-register the user equipment and enter the sleeping state, thereby preventing the situation of small cell base stations remaining in the non-sleeping state unnecessarily.

When the last user equipment exits the building, this is detected by small cell base station SBSC₁ (since the user equipment will hand over to the overlying macro base station and not to another small cell base station within the group). At that time, the guard base station will inform the femtocell controller/gateway 230, who will instruct all non-sleeping state small cell base stations to enter the sleeping state.

In order to avoid user equipment which was undetected by the guard base station from being provided with no coverage, additional guard base stations may be designated within the building. Likewise, small cell base stations within the building may be configured to automatically switch to the non-sleeping state periodically or be instructed by the femtocell controller/gateway 230 to switch from the non-sleeping state periodically in order to provide a hopping guard base station which patrols throughout the building. For example, each small cell base station may switch on at a random period which can be determined based on its unique identifier. The speed of activation of the hopping guard base stations would typically need to be faster than the typical mobility of the user equipment.

### Emergency Activation

The small cell base stations may have a feed from the building's emergency alarm system or a separate network node may be provided to link with the emergency alarm system and provide a message to the femtocell controller/gateway 230 when an emergency occurs. The femtocell controller/gateway 230 may then be configured to instruct every sleeping small cell base station within the building to transition to the non-sleeping state in order to maximise communications coverage throughout the building. Likewise, small cell base stations may be designated as emergency base stations and the femtocell controller/gateway 230 may be configured to only activate that sub-group of small cell base stations within the building.

### Power Outage

The small cell base stations may have a feed from the building's power alarm system or a separate network node may be provided to link with the power alarm system and provide a message to the femtocell controller/gateway 230 when an power outage occurs. The femtocell controller/gateway 230 may then be configured to instruct every non-sleeping small cell base station within the building to transition to the sleeping state in order to minimise power consumption and reduce the load on any emergency supply. Likewise, small cell base stations may be designated as power outage base stations and the femtocell controller/gateway 230 may be configured to only deactivate that sub-group of small cell base stations within the building.

As mentioned above, it will be appreciated that the femtocell controller/gateway 230 may utilise both the time period approach and the guard base station approach in order to optimize energy saving. For example, the femtocell controller/gateway 230 may only activate a particular sub-group of small cell base stations if the guard base station reports the presence of user equipment within a particular time period. For example, the femtocell controller/gateway 230 may only instruct the switching of the small cell base stations in group A to the non-sleeping state when the guard base station reports that user equipment is present after 8.00am.

In all example configurations, the messages transmitted from the femtocell controller/gateway 230 to groups or sub-groups of small cell base stations will typically be multi-cast messages designated for all small cell base stations within a sub-group, a plurality of sub-groups or the entire group.

Following a request to transition to the non-sleeping state, each small cell base station may apply a random time offset prior to switching on in order to prevent all small cell base stations switching on at the same time and causing a power surge.

It will be appreciated that this approach co-ordinates the management of energy saving across groups of small cell base stations that are co-located. This provides for an efficient and effective solution to energy saving and helps to minimise power consumption. Such a co-ordinated solution provides particular advantages in deployments utilising significant numbers of small cell base stations and obviates issues that may be encountered if co-located small cell base stations autonomously determine when to employ such energy saving.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling an operating state of small cell base stations (SBSC; F_{A}-Fc), said operating state comprising one of a non-sleeping state in which a small cell base station is operable to support communications with user equipment (44) and sleeping state in which a small cell base station is inoperable to support communications with user equipment, said method comprising the steps of:
determining whether a predetermined event has been experienced by at least one small cell base station of a group of small cell base stations and, if so, instructing at least a sub-group comprising a plurality of small cell base stations of said group of small cell base stations to transition between said non-sleeping state and said sleeping state.

2. The method of claim 1, wherein said predetermined event comprises detection of user equipment and said step of instructing comprises instructing a transition to said non-sleeping state.

3. The method of claim 1 or 2, wherein said predetermined event comprises failure to detect any user equipment by small cell base stations of at least one sub-group and said step of instructing comprises instructing a transition of said at least one sub-group to said sleeping state.

4. The method of any preceding claim, wherein said step of instructing comprises transmitting a multicast message to instruct said transition between said sleeping and said non-sleeping state.

5. The method of any preceding claim, comprising the step of configuring at least one small cell base station of said group to ignore instructions to transition to said sleeping state and instead to remain in said non-sleeping state.

6. The method of any preceding claim, comprising the step of configuring said small cell base stations to transition to said non-sleeping state periodically.

7. The method of any preceding claim, wherein said predetermined event comprises detection that a network time associated with said at least one small cell base station of said group now falls within one of a plurality of time periods, each time period being associated with an operating state allocated to that time period and said step of instructing comprises instructing a transition to one of said sleeping state and said non-sleeping state associated with said one of said plurality of time periods.

8. The method of any preceding claim, wherein said predetermined event comprises detection that a network time associated with said at least one small cell base station of said group now falls within one of a set of a plurality of time periods, each set of a plurality of time periods being associated with a different sub-group, each time period being associated with an operating state allocated during that time period for that time period, and said step of instructing comprises instructing a transition of said sub-group to one of said sleeping state and said non-sleeping state associated with said one of said set of said plurality of time periods.

9. The method of any preceding claim, wherein each small cell base station with each sub-group shares a common characteristic.

10. A network node operable to control an operating state of small cell base stations (SBSC; F_{A}- Fc), said operating state comprising one of a non-sleeping state in which a small cell base station is operable to support communications with user equipment and sleeping state in which a small cell base station is inoperable to support communications with user equipment (44), said network node comprising:
determining logic operable to determine whether a predetermined event has been experienced by at least one small cell base station of a group of small cell base stations and;
instruction logic operable, if said determining logic determines that said predetermined event has been experienced by at least one small cell base station of a group of small cell base stations, to instruct at least a sub-group comprising a plurality of small cell base stations of said group of small cell base stations to transition between said non-sleeping state and said sleeping state.

11. The network node of claim 10, wherein said predetermined event comprises detection of user equipment and said instruction logic operable to instruct a transition to said non-sleeping state.

12. The network node of claim 10 or 11, wherein said predetermined event comprises detection that a network time associated with said at least one small cell base station of said group now falls within one of a plurality of time periods, each time period being associated with an operating state allocated to that time period and said instruction logic is operable to instruct a transition to one of said sleeping state and said non-sleeping state associated with said one of said plurality of time periods.

13. The network node of any one of claims 10 to 12, wherein said predetermined event comprises detection that a network time associated with said at least one small cell base station of said group now falls within one of a set of a plurality of time periods, each set of a plurality of time periods being associated with a different sub-group, each time period being associated with an operating state allocated during that time period for that time period, and said instruction logic is operable to instruct a transition of said sub-group to one of said sleeping state and said non-sleeping state associated with said one of said set of said plurality of time periods.

14. The network node of any one of claims 10 to 13, wherein said network node comprises one of a gateway (230) and a small cell base station (SBSC; F_{A}- F_{C}).

15. A computer program product operable, when executed on a computer, to perform the method steps of any one of claims 1 to 9.

## Patentansprüche

1. Verfahren zur Steuerung eines Betriebszustands von kleinzelligen Basisstationen (SBSC; F_{A} - F_{C}), wobei der besagte Betriebszustand entweder einen nicht schlafenden Zustand, in welchem eine kleinzellige Basisstation betriebsfähig ist, um Kommunikationen mit einem Benutzergerät (44) zu unterstützen, oder einen schlafenden Zustand, in welchem eine kleinzellige Basisstation nicht betriebsfähig ist, um Kommunikationen mit einem Benutzergerät zu unterstützen, umfasst, wobei das besagte Verfahren die folgenden Schritte umfasst:
Ermitteln, ob an mindestens einer kleinzelligen Basisstation einer Gruppe von kleinzelligen Basisstationen ein vorbestimmtes Ereignis aufgetreten ist, und, wenn dies der Fall ist, Anweisen mindestens einer Untergruppe, welche eine Vielzahl von kleinzelligen Basisstationen der besagten Gruppe von kleinzelligen Basisstationen umfasst, einen Übergang zwischen dem besagten nicht schlafenden Zustand und dem besagten schlafenden Zustand durchzuführen.

2. Verfahren nach Anspruch 1, wobei das besagte vorbestimmte Ereignis das Erkennen des Benutzergeräts umfasst und der besagte Schritt des Anweisens das Anweisen eines Übergangs in den besagten nicht schlafenden Zustand umfasst.

3. Verfahren nach Anspruch 1 oder 2, wobei das besagte vorbestimmte Ereignis das Nichterkennen eines Benutzergeräts durch kleinzellige Basisstationen mindestens einer Teilgruppe umfasst, und der Schritt des Anweisens das Anweisen eines Übergangs der besagten mindestens einen Untergruppe in den besagten schlafenden Zustand umfasst.

4. Verfahren nach einem beliebigen der vorstehenden Ansprüche, wobei der besagte Schritt des Anweisens das Übertragen einer Multicast-Nachricht zur Anweisung des besagten Übergangs zwischen dem besagten schlafenden und dem besagten nicht schlafenden Zustand umfasst.

5. Verfahren nach einem beliebigen der vorstehenden Ansprüche, umfassend den Schritt des Konfigurierens mindestens einer kleinzelligen Basisstation der besagten Gruppe, um Anweisungen für den Übergang in den besagten schlafenden Zustand zu ignorieren und stattdessen in dem besagten nicht schlafenden Zustand zu verbleiben.

6. Verfahren nach einem beliebigen der vorstehenden Ansprüche, umfassend den Schritt des Konfigurierens der besagten kleinzelligen Basisstationen, um periodisch in den besagten nicht schlafenden Zustand überzugehen.

7. Verfahren nach einem beliebigen der vorstehenden Ansprüche, wobei das besagte vorbestimmte Ereignis das Erkennen, dass eine mit der besagten mindestens einen kleinzelligen Basisstation der besagten Gruppe assoziierte Netzwerkzeit nunmehr innerhalb einer einer Vielzahl von Zeitspannen liegt, umfasst, wobei jede Zeitspanne mit einem dieser Zeitspanne zugeordneten Betriebszustand assoziiert ist, und der besagte Schritt des Anweisens das Anweisen eines Übergangs entweder in den besagten mit der besagten einen der besagten Vielzahl von Zeitspannen assoziierten schlafenden Zustand oder den besagten nicht schlafenden Zustand umfasst.

8. Verfahren nach einem beliebigen der vorstehenden Ansprüche, wobei das besagte vorbestimmte Ereignis das Erkennen, dass eine mit der besagten mindestens einen kleinzelligen Basisstation der besagten Gruppe assoziierte Netzwerkzeit nunmehr innerhalb einer eines Satzes einer Vielzahl von Zeitspannen liegt, umfasst, wobei jeder Satz einer Vielzahl von Zeitspannen mit einem während dieser Zeitspanne für diese Zeitspanne zugeordneten Betriebszustand assoziiert ist, und der besagte Schritt des Anweisens das Anweisen eines Übergangs der besagten Untergruppe entweder in den besagten mit der besagten einen des besagten Satzes der besagten Vielzahl von Zeitspannen assoziierten schlafenden Zustand oder den besagten nicht schlafenden Zustand umfasst.

9. Verfahren nach einem beliebigen der vorstehenden Ansprüche, wobei jede kleinzellige Basisstation mit jeder Untergruppe eine gemeinsame Charakteristik teilt.

10. Netzwerkknoten, betreibbar für die Steuerung eines Betriebszustands von kleinzelligen Basisstationen (SBSC; F_{A} - F_{C}), wobei der besagte Betriebszustand entweder einen nicht schlafenden Zustand, in welchem eine kleinzellige Basisstation betriebsfähig ist, um Kommunikationen mit einem Benutzergerät zu unterstützen, oder einen schlafenden Zustand, in welchem eine kleinzellige Basisstation nicht betriebsfähig ist, um Kommunikationen mit einem Benutzergerät (44) zu unterstützen, umfasst, wobei der besagte Netzwerkknoten umfasst:
Ermittlungslogik, betreibbar, um zu ermitteln, ob an mindestens einer kleinzelligen Basisstation einer Gruppe von kleinzelligen Basisstationen ein vorbestimmtes Ereignis aufgetreten ist; und
Anweisungslogik, betreibbar, um, wenn die besagte Ermittlungslogik ermittelt, dass an mindestens einer kleinzelligen Basisstation einer Gruppe von kleinzelligen Basisstationen ein vorbestimmtes Ereignis aufgetreten ist, mindestens eine Untergruppe, welche eine Vielzahl von kleinzelligen Basisstationen der besagten Gruppe von kleinzelligen Basisstationen umfasst, anzuweisen, einen Übergang zwischen dem besagten nicht schlafenden Zustand und dem besagten schlafenden Zustand durchzuführen.

11. Netzwerkknoten nach Anspruch 10, wobei das besagte vorbestimmte Ereignis das Erkennen eines Benutzergeräts umfasst und die besagte Anweisungslogik betreibbar ist, um einen Übergang in den besagten nicht schlafenden Zustand anzuweisen.

12. Netzwerkknoten nach Anspruch 10 oder 11, wobei das besagte vorbestimmte Ereignis das Erkennen, dass eine mit der besagten mindestens einen kleinzelligen Basisstation der besagten Gruppe assoziierte Netzwerkzeit nunmehr innerhalb einer einer Vielzahl von Zeitspannen liegt, umfasst, wobei jede Zeitspanne mit einem dieser Zeitspanne zugeordneten Betriebszustand assoziiert ist und die besagte Anweisungslogik betreibbar ist, um einen Übergang entweder in den mit der besagten einen der besagten Vielzahl von Zeitspannen assoziierten schlafenden Zustand oder nicht schlafenden Zustand anzuweisen.

13. Netzwerkknoten nach einem beliebigen der Ansprüche 10 bis 12, wobei das besagte vorbestimmte Ereignis das Erkennen, dass eine mit der besagten mindestens einen kleinzelligen Basisstation der besagten Gruppe assoziierte Netzwerkzeit nunmehr innerhalb einer eines Satzes einer Vielzahl von Zeitspannen liegt, umfasst, wobei jeder Satz einer Vielzahl von Zeitspannen mit einer unterschiedlichen Untergruppe assoziiert ist, wobei jede Zeitspanne mit einem während dieser Zeitspanne für diese Zeitspanne zugeordneten Betriebszustand assoziiert ist, und die besagte Anweisungslogik betreibbar ist, um einen Übergang der besagten Untergruppe entweder in den mit dem besagten Satz der besagten Vielzahl von Zeitspannen assoziierten schlafenden Zustand oder nicht schlafenden Zustand anzuweisen.

14. Netzwerkknoten nach einem beliebigen der Ansprüche 10 bis 13, wobei der besagte Netzwerkknoten entweder ein Gateway (230) oder eine kleinzellige Basisstation (SBSC; F_{A} - F_{C}) umfasst.

15. Computerprogramm-Produkt, betreibbar, um bei dessen Ausführung auf einem Computer die Verfahrensschritte gemäß einem beliebigen der Ansprüche 1 bis 9 durchzuführen.

## Revendications

1. Procédé de commande d'un état de fonctionnement de stations de base à petites cellules (SBSC ; F_{A} - F_{C}), ledit état de fonctionnement comprenant un état parmi un état de non-sommeil dans lequel une station de base à petites cellules permet de prendre en charge des communications avec l'équipement utilisateur (44) et un état de sommeil dans lequel une station de base à petites cellules ne permet pas de prendre en charge des communications avec l'équipement utilisateur, ledit procédé comprenant les étapes suivantes :
déterminer si un évènement prédéterminé a été subi ou non par au moins une station de base à petites cellules d'un groupe de stations de base à petites cellules et, si tel est le cas, donner l'instruction à au moins un sous-groupe, comprenant une pluralité de stations de base à petites cellules dudit groupe de stations de base à petites cellules, d'effectuer une transition entre ledit état de non-sommeil et ledit état de sommeil.

2. Procédé selon la revendication 1, dans lequel ledit évènement prédéterminé comprend la détection de l'équipement utilisateur et ladite étape d'instruction consiste à donner l'instruction d'effectuer une transition vers ledit état de non-sommeil.

3. Procédé selon la revendication 1 ou 2, dans lequel ledit évènement prédéterminé comprend l'échec de la détection d'un quelconque équipement utilisateur par des stations de base à petites cellules d'au moins un sous-groupe et ladite étape d'instruction consiste à donner l'instruction d'effectuer une transition dudit au moins un sous-groupe vers ledit état de sommeil.

4. Procédé selon l'une quelconque des revendications précédentes, dans lequel ladite étape d'instruction comprend la transmission d'un message de multidiffusion pour donner l'instruction d'effectuer ladite transition entre ledit état de sommeil et ledit état de non-sommeil.

5. Procédé selon l'une quelconque des revendications précédentes, comprenant l'étape de configuration d'au moins une station de base à petites cellules dudit groupe pour ignorer des instructions pour effectuer une transition vers ledit état de sommeil et au lieu de cela de rester dans ledit état de non-sommeil.

6. Procédé selon l'une quelconque des revendications précédentes, comprenant l'étape de configuration desdites stations de base à petites cellules pour effectuer une transition vers ledit état de non-sommeil périodiquement.

7. Procédé selon l'une quelconque des revendications précédentes, dans lequel ledit évènement prédéterminé consiste à détecter qu'un temps de réseau associé à ladite au moins une station de base à petites cellules dudit groupe est maintenant compris dans une période parmi une pluralité de périodes, chaque période étant associée à un état de fonctionnement attribué à cette période et ladite étape d'instruction consiste à donner l'instruction d'effectuer une transition vers un état parmi ledit état de sommeil et ledit état de non-sommeil associé à ladite période parmi ladite pluralité de périodes.

8. Procédé selon l'une quelconque des revendications précédentes, dans lequel ledit évènement prédéterminé consiste à détecter qu'un temps de réseau associé à ladite au moins une station de base à petites cellules dudit groupe est maintenant compris dans une période parmi un ensemble d'une pluralité de périodes, chaque ensemble d'une pluralité de périodes étant associé à un sous-groupe différent, chaque période étant associée à un état de fonctionnement attribué durant cette période pour cette période, et ladite étape d'instruction consiste à donner l'instruction d'effectuer une transition dudit sous-groupe vers un état parmi ledit état de sommeil et ledit état de non-sommeil associé à ladite période parmi ledit ensemble de ladite pluralité de périodes.

9. Procédé selon l'une quelconque des revendications précédentes, dans lequel chaque station de base à petites cellules partage une caractéristique commune avec chaque sous-groupe.

10. Noeud de réseau permettant de commander un état de fonctionnement de stations de base à petites cellules (SBSC ; F_{A} - F_{C}), ledit état de fonctionnement comprenant un état parmi un état de non-sommeil dans lequel une station de base à petites cellules permet de prendre en charge des communications avec l'équipement utilisateur et un état de sommeil dans lequel une station de base à petites cellules ne permet pas de prendre en charge des communications avec l'équipement utilisateur (44), ledit noeud de réseau comprenant :
une logique de détermination permettant de déterminer si un évènement prédéterminé a été subi ou non par au moins une station de base à petites cellules d'un groupe de station de base à petites cellules et ;
une logique d'instruction permettant, si ladite logique de détermination détermine que ledit évènement prédéterminé a été subi par au moins une station de base à petites cellules d'un groupe de stations de base à petites cellules, de donner l'instruction à au moins un sous-groupe, comprenant une pluralité de stations de base à petites cellules dudit groupe de stations de base à petites cellules, d'effectuer une transition entre ledit état de non-sommeil et ledit état de sommeil.

11. Noeud de réseau selon la revendication 10, dans lequel ledit évènement prédéterminé comprend la détection de l'équipement utilisateur et ladite logique d'instruction permet de donner l'instruction d'effectuer une transition vers ledit état de non-sommeil.

12. Noeud de réseau selon la revendication 10 ou 11, dans lequel ledit évènement prédéterminé consiste à détecter qu'un temps de réseau associé à ladite au moins une station de base à petites cellules dudit groupe est maintenant compris dans une période parmi une pluralité de périodes, chaque période étant associée à un état de fonctionnement attribué à cette période et ladite logique d'instruction permet de donner l'instruction d'effectuer une transition vers un état parmi ledit état de sommeil et ledit état de non-sommeil associé à ladite période parmi ladite pluralité de périodes.

13. Noeud de réseau selon l'une quelconque des revendications 10 à 12, dans lequel ledit évènement prédéterminé consiste à détecter qu'un temps de réseau associé à ladite au moins une station de base à petites cellules dudit groupe est maintenant compris dans une période parmi un ensemble d'une pluralité de périodes, chaque ensemble d'une pluralité de périodes étant associé à un sous-groupe différent, chaque période étant associée à un état de fonctionnement attribué durant cette période pour cette période, et ladite logique d'instruction permet de donner l'instruction d'effectuer une transition dudit sous-groupe vers un état parmi ledit état de sommeil et ledit état de non-sommeil associé à ladite période parmi ledit ensemble de ladite pluralité de périodes.

14. Noeud de réseau selon l'une quelconque des revendications 10 à 13, ledit noeud de réseau comprenant une passerelle (230) ou une station de base à petites cellules (SBSC ; F_{A}- Fc).

15. Produit de programme informatique permettant, lorsqu'il est exécuté sur un ordinateur, d'exécuter les étapes du procédé selon l'une quelconque des revendications 1 à 9.
